# EUROPÄISCHE PATENTSCHRIFT

(11) **EP 2 843 997 B1**
(45) Veröffentlichungstag und Bekanntmachung des Hinweises auf die Patenterteilung: **15.06.2016**
(21) Anmeldenummer: 13182320.5
(22) Anmeldetag: 30.08.2013
(51) Int. Cl.: H04W 36/32, H04W 36/08

(54) **MOBILE VIRTUELLE BASISSTATION**
MOBILE VIRTUAL BASE STATION
STATION DE BASE VIRTUELLE MOBILE

(43) Veröffentlichungstag der Anmeldung: 04.03.2015
(73) Patentinhaber: Swisscom AG, 3050 Bern (CH)
(72) Erfinder: Wenger, Daniel, 3628 Uttigen (CH)
(74) Vertreter: P&TS SA (AG, Ltd.)

(56) Entgegenhaltungen:
- US-A1- 2006 264 212
- US-A1- 2009 141 685
- US-A1- 2013 086 665

## Beschreibung

### Technisches Gebiet

Die Erfindung bezieht sich auf ein Verfahren für ein zelluläres Kommunikationssystem und ein Kommunikationssystem.

### Stand der Technik

Die Verbindungsqualität im modernen Mobilfunk hat sich in den letzten Jahren stark verbessert. Allerdings gibt es immer noch Situationen, in denen der Verbindungsaufbau, die Aufrechterhaltung der Verbindung und die Qualität Schwierigkeiten bereiten. Dies ist zum Beispiel in Zügen, die eine grosse Anzahl von Mobilfunkgeräten mit sich führen, der Fall. Aufgrund der Geschwindigkeit muss jedes Mobilfunkgerät im Zug ständig eine Verbindungsübergabe zu der nächsten Basisstation organisieren. Dies ist nicht nur eine starke Belastung für das Mobilfunkgerät und die bestehende Verbindung. Dies belastet auch das Mobilfunknetz jedes Mal sehr stark, wenn der Zug in das Gebiet einer neuen Basisstation kommt. In einer solchen Situation frägt eine grosse Anzahl von Mobilfunkgeräten ungefähr gleichzeitig eine Verbindungsübergabe bei der gleichen Basisstation an. Die Basisstation muss somit für Belastungen ausgelegt werden, die weit über der Durchschnittsbelastung liegen. Ausserdem gibt es in modernen Mobilfunkgeräten viele Anwendungen, die nicht stabil gegenüber einer Verbindungsübergabe zu der nächsten Basisstation sind.

US2008043655 schlagen für WLAN Verbindungen im Zug vor, in dem Zug eine WLAN-Basisstation zu installieren und entlang der Zugstrecke Verbindungspunkte zu installieren, mit denen die WLAN Basisstation die Signale der mit ihr verbundenen Geräte austauscht. Somit müssen die verbundenen Geräte keine Verbindungsübergabe organisieren, da sie immer die gleiche Basisstation sehen.

WO0036858 offenbart eine ähnliche Lösung für den Mobilfunk. In jedem Zug wird eine Basisstation installiert, mit der sich alle Mobilfunkgeräte in dem Zug verbinden können, so dass die Mobilfunkgeräte immer eine gute Verbindung zu der Basisstation haben. Die Basisstation kontaktiert nacheinander feste Basisstationen ausserhalb des Zuges entlang der Zugstrecke, so dass nur eine Verbindungsübergabe von der mobilen Basisstation organisiert werden muss. Allerdings wird so den Mobilfunkgeräten eine gute Verbindung angezeigt, obwohl evtl. gar keine Verbindung besteht. Dies kann auch zu Problemen führen.

EP1237389 offenbart, eine Gruppe von Mobilfunkgeräten in dem Zug auf der Basis einer gemeinsamen Bewegung zu detektieren. Auf der Basis der gemeinsamen Bewegung wird die nächste feste Basisstation geschätzt und dieser Basisstation bereits die Autorisierungsinformationen der Mobilfunkgeräte bereits vor der Verbindungsübergabeanfrage der Mobilfunkgeräte geschickt. Somit kann die Verbindungsübergabe in der nächsten festen Basisstation schon vorbereitet werden. Allerdings hat dies immer noch den Nachteil, dass die Mobilfunkgeräte regelmässig Verbindungsübergaben machen müssen.

US2009/0141685 offenbart für einzelne Mobilfunkgeräte eine virtuelle Basisstation zu schaffen, die der Bewegung des Mobilfunkgeräts folgt. Dies erlaubt es dem Mobilfunkgerät ohne jegliche Verbindungsübergaben zu kommunizieren. Die Wechsel der festen Basisstationen finden im Netz statt. Allerdings sind die Detektion der Bewegung, die Vorhersage der wahrscheinlichen nächsten festen Basisstation, in deren Bereich sich das Mobilfunkgerät bewegt, und die Verbindungsübergabe der virtuellen Basisstation aufwendig für das Kommunikationssystem. Bei einer Vielzahl von Mobilfunkgeräten in einem Zug, wäre die Verwaltung von einer entsprechenden Vielzahl von virtuellen Basisstationen ein hoher administrativer Aufwand.

Ein weiterer Stand der Technik ist US2013/0086665 und US 2006/0264212.

### Darstellung der Erfindung

In Anbetracht des Stands der Technik ist es eine Aufgabe der Erfindung, eine Lösung zu finden, die den Aufwand von sich in grossen Gruppen gemeinsam bewegenden Mobilgeräten und des Kommunikationssystem für die Verbindungsübergaben gering zu halten.

Die Erfindung ist den unabhangigen Ansprüchen 1, 13 und 14 definiert.

Dieses Ziel ist durch ein Verfahren für ein zelluläres Kommunikationssystem mit festen Basisstationen mit den folgenden Schritten gelöst. Auswählen einer ersten festen Basisstation auf der Basis des Orts und/oder der Bewegung einer Gruppe von Mobilgeräten, die mit einer virtuellen Basisstation verbunden sind. Aussenden von Signalen der virtuellen Basisstation von der ausgewählten festen Basisstation.

Dieses Ziel ist ebenfalls durch ein Verfahren für ein zelluläres Kommunikationssystem mit festen Basisstationen mit den folgenden Schritten gelöst. Auswählen einer festen Basisstation auf der Basis des Orts und/oder der Bewegung eines Beförderungsmittels. Aussenden von Signalen der virtuellen Basisstation von der ausgewählten festen Basisstation.

Dieses Ziel ist weiterhin durch ein Computerprogramm gelöst, das ausgebildet ist, bei Ausführen auf einem Prozessor die Schritte des zuvor beschriebenen Verfahrens auszuführen.

Dieses Ziel wird weiterhin durch ein Kommunikationssystem erreicht. Das Kommunikationssystem weist feste Basisstationen zur drahtlosen Kommunikation mit Mobilgeräten auf, die ausgebildet sind, Signale einer virtuellen Basisstation auszusenden. Das Kommunikationssystem weist eine Auswahlvorrichtung auf, ausgebildet zum Auswählen einer festen Basisstation auf der Basis des Orts und/oder der Bewegung einer Gruppe von Mobilgeräten oder eines Beförderungsmittels. Das Kommunikationssystem weist auch eine Steuervorrichtung auf, ausgebildet zum Veranlassen der Aussendung von Signalen der virtuellen Basisstation von der ausgewählten festen Basisstation.

Durch die Verwendung von virtuellen Basisstationen für eine Gruppe von Mobilgeräten mit gleicher Bewegung oder für ein Beförderungsmittel, kann somit eine mit einer festen Basisstation vergleichbare virtuelle Basisstation geschaffen werden, die während der gemeinsamen Bewegung der Gruppe von Mobilgeräten diese begleitet. Somit wird der Aufwand für das Kommunikationssystem gering gehalten und gleichzeitig den Mobilgeräten ermöglicht sich ohne eine Verbindungsübergabe zwischen festen Basisstationen zu bewegen. Die Veranlassung des Wechsels der virtuellen Basisstation im Kommunikationssystem erlaubt es auch viele Parameter für die Auswahl der nächsten Basisstation zu berücksichtigen, was nicht möglich ist, wenn das Mobilgerät die Basisstation mit dem stärksten Signal auswählt. Solche Parameter könnten zum Beispiel die Auslastung, die Verbindungsqualität, die Länge der möglichen Verbindung für einen vorausgesagten Weg der Gruppe von Mobilgeräten sein.

Weitere vorteilhafte Ausführungsformen sind in den Unteransprüchen angegeben.

In einem Ausführungsbeispiel wird eine feste Basisstation auf der Basis des Orts und/oder der Bewegung einer Gruppe von Mobilgeräten, die mit einer virtuellen Basisstation verbunden sind, ausgewählt.

In einem Ausführungsbeispiel werden feste Basisstationen der Vielzahl an festen Basisstationen nacheinander so ausgewählt, dass die virtuelle Basisstation die Gruppe von Mobilgeräten begleitet. Somit müssen die Mobilgeräte, die mit der virtuellen Basisstation eingeloggt sind, während Ihrer Route keine Verbindungsübergabe zwischen Basisstationen anfragen, da die Mobilgeräte immer die gleiche Basisstation, nämlich die virtuelle Basisstation sehen, die sie währen Ihrer Route begleitet.

In einem Ausführungsbeispiel wird nach dem Auswählen der festen Basisstation, das Aussenden von Signalen der der Gruppe von Mobilgeräten zugeordneten virtuellen Basisstation von einer weiteren festen Basisstation gestoppt. Somit wird der Wechsel der auszusendenden festen Basisstation realisiert, in dem die Signale der virtuellen Basisstation nicht mehr von der weiteren festen Basisstation ausgesendet werden, aber dafür nun von der ausgewählten Basisstation ausgesendet werden.

In einem Ausführungsbeispiel wechselt die weitere feste Basisstation nach dem Stoppen des Aussendens der Signale der virtuellen Basisstation in einen Ruhezustand. Somit müssen feste Basisstationen, die zum Aussenden von virtuellen Basisstationen gedacht sind, nur für die Zeit in einem Betriebszustand betrieben werden, in dem eine virtuelle Basisstation von dieser festen Basisstation ausgesendet wird. Danach kann die Basisstation wieder in einen Ruhezustand gefahren werden. Somit kann ein solches System energiesparend betrieben werden.

In einem Ausführungsbeispiel wechselt die weitere feste Basisstation nach dem Stoppen des Aussendens der Signale der virtuellen Basisstation in einen Ruhezustand, wenn die weitere feste Basisstation keine weiteren Signale einer weiteren virtuellen Basisstation aussendet.

In einem Ausführungsbeispiel wechselt die ausgewählte feste Basisstation vor dem Beginn des Aussendens der Signale der virtuellen Basisstation von einem Ruhezustand in einen Betriebszustand. Da normalerweise das Auswählen der festen Basisstation bereits eine kurze Zeit vor dem Beginn des Aussendens der Signale der virtuellen Basisstation von der ausgewählten festen Basisstation geschieht, besteht die Zeit die festen Basisstation in einen sehr energiesparenden Ruhezustand zu versetzen, da innerhalb der Zeitspanne zwischen dem Auswählen und dem Beginn des Aussendens genügend Zeit besteht, die ausgewählte feste Basisstation in einen Betriebszustand zu versetzen.

In einem Ausführungsbeispiel sind die Signale der virtuellen Basisstation so ausgebildet, dass ein mit der virtuellen Basisstation verbundenes Mobilgerät der Gruppe von Mobilgeräten keine Verbindungsübergabe durchführen muss, wenn die Signale der virtuellen Basisstation von zwei verschiedenen nacheinander ausgewählten Basisstationen ausgesendet werden. Somit sehen die mit der virtuellen Basisstation verbundenen Mobilgeräte immer die gleiche Basisstation, nämlich die virtuelle Basisstation, die sich mit den Mobilgeräten mitbewegt.

In einem Ausführungsbeispiel weist die Erzeugung der virtuellen Basisstation die folgenden Schritte auf. Erzeugen der virtuellen Basisstation; Bestimmen einer festen Basisstation zum ersten Aussenden der Signale der virtuellen Basisstation; und Aussenden der Signale der virtuellen Basisstation von der bestimmten festen Basisstation. Die virtuelle Basisstation muss einmal erzeugt werden und an einer bestimmten festen Basisstation das erste Mal ausgesendet werden. Danach Funktioniert die Bewegung der virtuellen Basisstation automatisch auf der Basis der Bewegung der Gruppe von Mobilgeräten, die mit der Basisstation verbunden sind. Durch die Bewegung der virtuellen Basisstation werden sich automatisch die Mobilgeräte von der virtuellen Basisstation abmelden (und sich bei einer anderen virtuellen oder festen Basisstation anmelden), die sich relativ zu der virtuellen Basisstation zu weit weg bewegt haben, dass sie keine Verbindung mehr zu der virtuellen Basisstation haben. Gleichzeitig werden sich automatisch die Mobilgeräte nach und nach in die virtuelle Basisstation einloggen, die die gleiche Bewegung wie die virtuelle Basisstation haben.

In einem Ausführungsbeispiel weist das Bestimmen der festen Basisstation zum ersten Aussenden der Signale der virtuellen Basisstation das Detektieren einer Gruppe von Mobilgeräten auf der Basis einer gemeinsamen Bewegung und das Bestimmen der festen Basisstation auf der Basis eines momentanen und/oder zukünftigen Orts der detektierten Gruppe von Mobilgeräten auf. Somit können gezielt dort virtuelle Basisstationen erzeugt werden, wo sie benötigt werden.

In einem Ausführungsbeispiel wird die feste Basisstation zum ersten Aussenden der Signale der virtuellen Basisstation in der Nähe von Verkehrsknotenpunkten gewählt wird. Dies hat den Vorteil, dass das Kommunikationssystem nicht die Bewegung von allen Mobilgeräten detektieren muss, um eine virtuelle Basisstation zu erzeugen. In Verkehrsknotenpunkten bilden sich in der Regel Gruppen mit der gleichen Bewegung. Wenn nun eine virtuelle Basisstation an so einem Knotenpunkt des Verkehrs, z.B. einem Bahnhof, oder in dessen Nähe erzeugt wird, wird die virtuelle Basisstation nach einer gewissen Zeit einer kleinen Gruppe von Mobilgeräten, die sich mit der virtuellen Basisstation verbunden haben, folgen. Wenn diese Gruppe von Mobilgeräten sich nun in Gesellschaft von anderen Mobilgeräten befindet, werden diese sich nach und nach alle in die virtuelle Basisstation einwählen, da diese kontinuierlich eine gute Verbindungsqualität bietet. Dabei kann die virtuelle Basisstation von einer festen Basisstation in der Nähe des Verkehrsknotenpunkts in Richtung einer Wegfahrstrecke eines Beförderungsmittels versetzt ausgesendet werden, so dass sich das Signal bei Wegfahrt aus dem Verkehrsknotenpunkt verstärkt. Wenn verschiedene virtuelle Basisstation in verschiedenen festen Basisstationen, die jeweils an verschiedenen Wegfahrstrecken des Verkehrsknotenpunkts von diesem versetzt angeordnet sind, ausgesendet werden, wählt ein sich von dem Verkehrsknotenpunkt auf der Wegfahrtstrecke entfernendes Mobilgerät sich automatisch in das stärker werdende Signal der entsprechenden virtuellen Basisstation ein.

In einem Ausführungsbeispiel weist das Bestimmen der festen Basisstation zum ersten Aussenden der Signale der virtuellen Basisstation das Detektieren eines Beförderungsmittels und das Bestimmen der festen Basisstation auf der Basis eines momentanen und/oder zukünftigen Orts des Beförderungsmittels auf. Somit kann gezielt für jedes Beförderungsmittel, dem noch keine virtuelle Basisstation zugeordnet ist, eine virtuelle Basisstation erzeugt werden.

In einem Ausführungsbeispiel wird die virtuelle Basisstation gelöscht, wenn weniger als eine bestimmte Anzahl von Mobilgeräten mit der virtuellen Basisstation verbunden sind oder falls weniger als eine bestimmte Anzahl von Mobilgeräten für länger als eine bestimmte Zeit mit der virtuellen Basisstation verbunden sind. Das Löschen erfolgt durch das Abschwächen des Signals der virtuellen Basisstation, so dass Mobilgeräte, die noch mit der virtuellen Basisstation verbunden sind, einen handover zu einer festen oder einer anderen virtuellen Basisstation durchführen.

In einem Ausführungsbeispiel sendet das Kommunikationssystem die Informationen für die mit der virtuellen Basisstation verbundenen Mobilgeräte an mehrere feste Basisstationen aus, und die ausgewählte feste Basisstation sendet die empfangenen Informationen mit den Signalen der virtuellen Basisstation aus. Dies hat den Vorteil, dass das Kommunikationssystem keinen Verwaltungsaufwand betreiben muss, um zu überwachen, welche feste Basisstation nun gerade die virtuelle Basisstation beherbergt. Die Informationen für die virtuelle Basisstation werden an mehrere Basisstationen gleichzeitig gesendet (Multicast), so dass die ausgewählte Basisstation nur die Identifizierungsinformationen der virtuellen Basisstation benötigt, um sich die auszusendenden Information der virtuellen Basisstation aus dem Multicastnetzwerk zu holen.

In einem Ausführungsbeispiel ist das Kommunikationssystem ein Mobiltelefonnetz. Gerade für Mobiltelefonnetze ist die erfindungsgemässe Lösung sehr vorteilhaft, da gerade hier das Problem der Gruppenbewegung von Mobilgeräten gehäuft auftritt.

In einem Ausführungsbeispiel ist die ausgewählte feste Basisstation ausgebildet, Signale mehrerer virtueller Basisstationen gleichzeitig auszusenden.

In einem Ausführungsbeispiel ist die ausgewählte feste Basisstation ausgebildet, gleichzeitig zu der Aussendung der Signale der virtuellen Basisstation Signale zu der ausgewählten festen Basisstation zugeordnete Signale auszusenden.

### Kurze Beschreibung der Figuren

Die Erfindung wird anhand der beigefügten Figuren näher erläutert, wobei zeigen
- **Fig. 1**: eine Ansicht eines Ausführungsbeispiels eines Kommunikationssystems;
- **Fig. 2**: die Vorrichtungen eines Ausführungsbeispiels einer Steuervorrichtung eines Kommunikationssystems;
- **Fig. 3**: die Vorrichtungen eines alternativen Ausführungsbeispiels einer Steuervorrichtung des Kommunikationssystems; und
- **Fig. 4**: eine schematische Darstellung beispielhafter Verfahrensschritte des Kommunikationssystems.

### Wege zur Ausführung der Erfindung

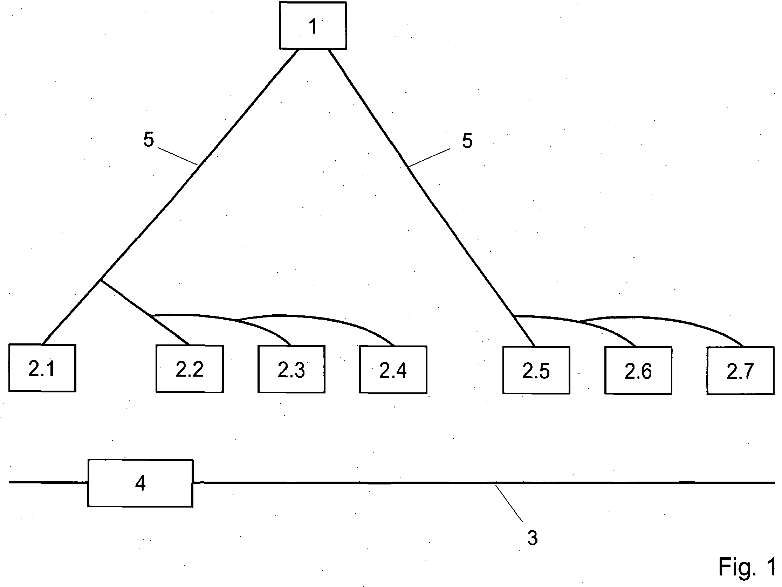

Fig. 1 zeigt ein Ausführungsbeispiel eines Kommunikationssystems. Das Kommunikationssystem weist eine Vielzahl an festen Basisstationen 2 auf, die über mindestens eine Verbindung 5 mit einem oder mehreren Netzknoten 1 des Kommunikationssystems verbunden sind.

Das Kommunikationssystem ist zum Beispiel ein Mobilfunknetz oder Mobiltelefonnetz, wie GSM, GPRS, UMTS, LTE oder ein anderer Mobilfunkstandard zur mobilen Kommunikation. Aber die Erfindung ist nicht auf Mobiltelefone beschränkt, sondern ist auch auf Wireless Local Area Networks (WLAN), Wide Area Networks (WAN) oder andere drahtlose zelluläre Kommunikationssysteme anwendbar.

Die festen Basisstationen 2 sind die Zugangspunkte (access points), die Mobilgeräte des Kommunikationssystems über eine drahtlose Verbindung mit dem Netzknoten 1 und/oder umgekehrt verbinden. Jede Basisstation 2 deckt in Abhängigkeit der Sendecharakteristika der Basisstation und der örtlichen Gegebenheiten ein bestimmtes Sendegebiet ab.

Die Vielzahl an festen Basisstationen 2 ist örtlich so angeordnet, dass die festen Basisstationen 2 mit ihren Sendegebieten zusammen ein bestimmtes Sendegebiet abdecken. Dies kann zum Beispiel das in Fig. 1 gezeigte Gleis 3 einer bestimmten Zugstrecke oder ein Gleisnetz für den Zugverkehr in einem bestimmten Gebiet sein. Die Erfindung ist natürlich genauso entlang von Autobahnen, Flüssen und anderen Verkehrswegen und von anderen Beförderungsmitteln (wie z.B. Kraftfahrzeug, Schiff, etc.) anwendbar. Auch kann das Kommunikationssystem weitere feste Basisstationen 2, die nicht in der Nähe des Gleises 3 liegen, aufweisen.

Eine feste Basisstation des Stands der Technik sendet jeweils ein der festen Basisstation zugehöriges Signal aus. Auf der Basis dieses der festen Basisstation zugehörigen Signals, kann ein Mobilgerät diese feste Basisstation des Kommunikationssystems identifizieren und von anderen Basisstationen unterscheiden. Auf der Basis verschiedener Signale verschiedener Basisstationen entscheidet das Mobilgerät, mit welcher Basisstation es sich verbindet. Nach der gegenwärtigen Erfindung sind die festen Basisstationen 2 ausgebildet, ein zu einer oder mehreren virtuellen Basisstation gehörendes Signal auszusenden. Dabei sind die Signale der virtuellen Basisstation so ausgebildet, dass sie einem in der virtuellen Basisstation eingewählten Mobilgerät immer von der gleichen Basisstation, nämlich der virtuellen Basisstation, kommend erscheinen, egal von welcher festen Basisstation 2 diese Signale der virtuellen Basisstation gesendet werden. In Fig. 1 ist die feste Basisstation 2.2 in der Nähe eines Zuges 4 und die feste Basisstation 2.2 sendet Signale einer virtuellen Basisstation aus.

In einem Ausführungsbeispiel ist die Vielzahl der festen Basisstationen 2 ausgebildet, sowohl der entsprechenden festen Basisstation 2 zugehörige Signale als auch Signale mindestens einer virtuellen Basisstation auszusenden. In einem anderen Ausführungsbeispiel ist die Vielzahl der festen Basisstationen 2 ausgebildet, nur Signale mindestens einer virtuellen Basisstation auszusenden ohne der entsprechenden Basisstation zugehörige Signale auszusenden. In einem weiteren Ausführungsbeispiel weist die Vielzahl an festen Basisstationen 2 erste feste Basisstationen 2 auf, die sowohl eigene Signale als auch Signale mindestens einer virtuellen Basisstation aussenden und als auch zweite feste Basisstationen 2 auf, die nur Signale mindestens einer virtuellen Basisstation aussenden. In allen Ausführungsbeispielen ist es möglich, dass eine feste Basisstation 2 zusätzlich Signale von zumindest einer weiteren virtuellen Basisstation aussendet.

Im Stand der Technik werden feste Basisstationen normalerweise durch eine optische Punkt-zu-Punkt Verbindung mit einem Netzknoten verbunden. In dem Ausführungsbeispiel in Fig. 1 wird ein Multicastnetz für die Verbindung von mehreren festen Basisstationen 2 mit dem Netzknoten 1 verwendet. Beispielsweise ist dies ein passives optisches Netzwerk (PON), das über die Verbindung 5, die gleichen Informationen zu den festen Basisstationen 2.1, 2.2, 2.3 und 2.4 und die gleichen Informationen zu den festen Basisstationen 2.5, 2.6 und 2.7 bringt. Ohne Beschränkung der Erfindung sind hier in dem ersten Zweig vier feste Basisstationen 2 und in dem zweiten Zweig drei feste Basisstationen 2 angeordnet. Jede andere Anzahl von festen Basisstationen 2 in einem Zweig und jede andere Anzahl von Zweigen ist möglich. Dies hat den Vorteil, dass das Kommunikationssystem keinen Verwaltungsaufwand betreiben muss, um zu überwachen, welche feste Basisstation 2 nun gerade die virtuelle Basisstation beherbergt, um die richtigen Informationen zu den ausgewählten festen Basisstationen 2 zu senden. Die Informationen für die virtuelle Basisstation werden an mehrere Basisstationen 2 gleichzeitig gesendet (Multicast), so dass die ausgewählte Basisstation nur die Identifizierungsinformationen der virtuellen Basisstation benötigt, um sich die auszusendenden Information der virtuellen Basisstation aus dem Multicastnetzwerk zu holen. Somit werden alle Informationen über alle in den festen Basisstationen 2.1 bis 2.4 aktiven virtuellen Basisstationen an all diese festen Basisstationen 2.1 bis 2.4 gesendet. Somit ist ein Wechsel der virtuellen Basisstation zwischen den festen Basisstationen 2 mit einem sehr geringen Verwaltungsaufwand für das Kommunikationssystem möglich. Das Multicastnetz könnte auch zusätzlich zu einer Punkt-zu-Punkt Verbindung zu dem Netzknoten 1 bestehen. Somit könnten Informationen für ein der festen Basisstation 2 zugehöriges Signal über die Punkt-zu-Punkt Verbindung an die feste Basisstation 2 gesendet werden, während die Informationen für die virtuellen Basisstationen über das Multicastnetz 5 an die festen Basisstationen 2 gesendet wird. Natürlich ist es auch möglich die Informationen für die virtuelle Basisstation über Punkt-zu-Punkt Verbindungen an die ausgewählte feste Basisstation 2 zu senden.

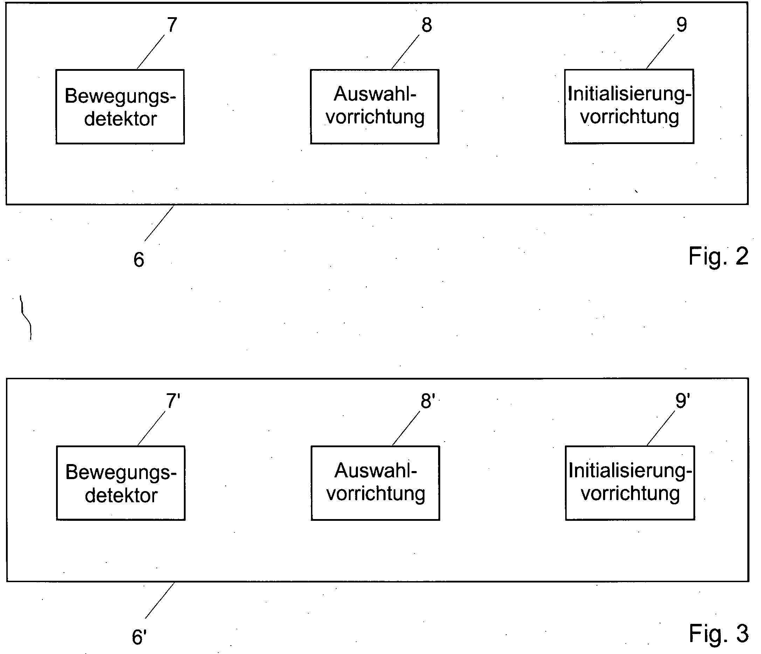

Fig. 2 zeigt ein Ausführungsbeispiel einer Steuervorrichtung 6 des Kommunikationssystems. Die Steuervorrichtung 6 weist einen Bewegungsdetektor 7, eine Auswahlvorrichtung 8 und eine Initialisierungsvorrichtung 9 auf. Die Steuervorrichtung 6 und/oder deren Untervorrichtungen kann/können sowohl zentral in dem Kommunikationssystem, als auch dezentral in den festen Basisstationen 2, als auch dazwischen in den Netzknoten 1, als auch verteilt über eine zentrale Stelle, die Netzknoten 1 und die festen Basisstationen 2 angeordnet sein.

Der Bewegungsdetektor 7 ist ausgebildet, den Ort und/oder die Bewegung eines Mobilgeräts zu detektieren. Dies kann durch die kontinuierliche Bestimmung des Orts über die Zeit des Mobilgeräts geschehen. Der Ort eines Mobilgeräts kann z.B. durch Triangulation von zwischen verschiedenen Basisstationen ausgesendeten Signalen bestimmt werden. Der Ort kann aber auch gröber aufgelöst durch die verwendete feste Basisstation 2 bestimmt werden, z.B. feste Basisstation 2 in Abhängigkeit von der Zeit des Anmeldens oder Abmeldens in dieser festen Basisstation 2 bzw., wenn das Mobilgerät mit einer virtuellen Basisstation verbunden ist, die die virtuelle Basisstation aussendende feste Basisstation 2 in Abhängigkeit von der Zeit.

Die Auswahlvorrichtung 8 ist ausgebildet, auf der Basis des Orts und/oder der Bewegung der Gruppe von Mobilgeräten, die mit einer virtuellen Basisstation verbunden sind, die feste Basisstation 2 auszuwählen, in deren Sendebereich die Gruppe von Mobilfunkgeräten eindringt oder eindringen wird. Dazu erhält die Auswahlvorrichtung 8 von dem Bewegungsdetektor 7 den Ort und/oder die Bewegung der Mobilgeräte, die in einer virtuellen Basisstation eingewählt sind. Alternativ genügt es auch den Ort und/oder die Bewegung von einer repräsentativen Untergruppe der Mobilgeräte, die in einer virtuellen Basisstation eingewählt sind, zu erhalten. Aus der Bewegung der Mobilgeräte der Gruppe bzw. der Untergruppe der eingewählten Mobilgeräte kann die Bewegung der ganzen Gruppe/Untergruppe, z.B. durch Mittelung, Medianbestimmung oder andere Funktionen der Einzelbewegungen, bestimmt werden. In einem Ausführungsbeispiel wird diese Auswahl gemacht, sobald sich die Gruppe von Mobilgeräten in einem Übergangsbereich zwischen einer ersten festen Basisstation 2, die noch die Signale der virtuellen Basisstation aussendet, und zumindest einer zweiten festen Basisstation 2, in deren Sendebereich die Gruppe von Mobilgeräten eindringt, befindet. In einem Ausführungsbeispiel wird diese Auswahl bereits vor dem Erreichen des Übergangsbereichs und/oder vor dem Wechsel der virtuellen Basisstation gemacht. Dies hat den Vorteil, dass die ausgewählte feste Basisstation 2 bereits vor dem Basisstationswechsel der virtuellen Basisstation informiert werden kann, und ein reibungsloser Wechsel der virtuellen Basisstation zwischen zwei festen Basisstationen 2 vorbereitet werden kann, z.B. das Aufwecken der festen Basisstation 2 aus dem Ruhezustand. Sollten an dem Ort des Wechsels oder des vorhergesagten Wechsels der festen Basisstation 2, die die virtuelle Basisstation aussendet, mehr als eine feste Basisstation 2 mit einem guten Signal in Frage kommen, so kann die Auswahl dabei auch eine Schätzung der zukünftigen Route der Gruppe von Mobilgeräten berücksichtigen, um die nächste feste Basisstation 2 zur Aussendung der Signale der virtuellen Basisstation zu bestimmen. Die zukünftige Route kann in einem Ausführungsbeispiel auf der Basis der bisherigen Route geschätzt werden. In einem anderen Ausführungsbeispiel kann die zukünftige Route auf der Basis der zuvorigen Route in Kombination mit Daten von anderen Gruppen von Mobilfunkgeräten, die die gleiche oder eine ähnliche zuvorige Route gewählt haben, geschätzt werden. In einem anderen Ausführungsbeispiel kann die zukünftige Route auf der Basis der zuvorigen Route in Kombination mit Daten von Verkehrswegen geschätzt werden. In einem weiteren Ausführungsbeispiel kann die zukünftige Route auf der Basis eines detektierten Beförderungsmittels mit bekannter zukünftiger Route geschätzt werden. Das Beförderungsmittel kann zum Beispiel auf der Basis des Orts der Gruppe identifiziert werden, wobei der Ort der Gruppe mit Orten von bekannten Beförderungsmitteln abgeglichen wird, um das Beförderungsmittel zu detektieren. Mit dem Wissen der zukünftigen Route kann bei der Auswahl der nächsten festen Basisstation 2 für die Aussendung der Signale der virtuellen Basisstation, z.B. mit Hilfe eines Plans der festen Basisstationen, berücksichtigt werden, welche feste Basisstation 2 auch für den zukünftigen Weg die beste Verbindungsqualität und/oder eine möglichst lange Verbindung mit der festen Basisstation 2 erlaubt. Bei der Auswahl können auch andere Parameter der festen Basisstationen 2, wie z.B. die Auslastung, berücksichtigt werden. Vielleicht wäre eine Basisstation aufgrund ihrer Lage optimal für die Verbindung, kann aber aufgrund der hohen Auslastung keine sichere Verbindung garantieren. So kann eine alternative feste Basisstation 2 ausgewählt werden, die auch mit der nächstschlechteren Lage aufgrund der niedrigeren Auslastung am Ende doch eine bessere Verbindungsqualität bieten kann.

Die Initialisierungsvorrichtung 9 ist ausgebildet, den Zeitpunkt und/oder die feste Basisstation 2 für die Erzeugung einer virtuellen Basisstation zu bestimmen. Das Kommunikationssystem entscheidet über die Erzeugung einer virtuellen Basisstation. Die virtuelle Basisstation wird nicht auf Anfrage eines Mobilgeräts erzeugt. Beispiele für die Initialisierungsvorrichtung 9 werden später beschrieben.

Die Steuervorrichtung 6 ist ausgebildet, virtuelle Basisstationen zu erzeugen, zu löschen, zu verwalten und den festen Basisstationen 2 Anweisungen für das Aussenden der virtuellen Basisstationen zu senden.

Die Verwaltung umfasst dabei z.B. die Zuordnung der mit der virtuellen Basisstation verbundenen Mobilgeräte und die Zuordnung der virtuellen Basisstation mit einer oder mehreren festen Basisstationen 2, von der die virtuelle Basisstation ausgesendet wird. Dies könnte zum Beispiel dadurch realisiert werden, dass in den Besucherortsregistern (Visitor Location Register; VLR) der mobilen Schaltzentren (Mobile-services Switching Centre; MSC) die virtuellen Basisstationen, die von den mit dem mobilen Schaltzentrum verbundenen festen Basisstationen 2 ausgesendet werden, mit aufgenommen werden. Der Netzknoten 1 könnte zum Beispiel ein solches MSC sein. Somit müsste nur noch eine Zuordnung einer jeden virtuellen Basisstation mit einer (oder mehreren) festen Basisstation 2, die die entsprechende virtuelle Basisstation aussendet, gespeichert werden. Die Mobilgeräte wählen sich dabei selbstständig in einer von einer festen Basisstation 2 ausgesendeten virtuellen Basisstation ein, wenn dessen Signal am stärksten ist oder sonstige Entscheidungskriterien (des Standards) für die virtuelle Basisstation sprechen. Das Kommunikationssystem überwacht in der Steuervorrichtung 6 die aktuell verbundenen Mobilgeräte einer jeden virtuellen Basisstation. Die Verwaltung einer virtuellen Basisstation beinhaltet auch die virtuelle Basisstation einer neuen festen Basisstation 2 zuzuordnen, wenn die Auswahlvorrichtung 8 einen Wechsel der festen Basisstation 2 entscheidet.

Eine virtuelle Basisstation wird erzeugt, wenn die Initialisierungsvorrichtung 9 entscheidet, dass eine virtuelle Basisstation erzeugt wird (siehe unten). Dazu übergibt die Initialisierungsvorrichtung die feste Basisstation 2 und evtl. den Zeitpunkt für die Erzeugung der virtuellen Basisstation.

Anderseits löscht die Steuervorrichtung 6 bei Erfüllen bestimmter Bedingungen eine virtuelle Basisstation nach deren ordnungsgemässem Herunterfahren. Das Herunterfahren geschieht zum Beispiel durch ein kontinuierliches Abschwächen des Signals, so dass die in der virtuellen Basisstation angemeldeten Mobilgeräte automatisch einen Handover zu einer anderen virtuellen Basisstation oder einer festen Basisstation 2 durchführen, sobald deren Signal stärker ist, als das der herunterfahrenden virtuellen Basisstation. Eine solche Bedingung ist zum Beispiel das Unterschreiten der Anzahl der mit der virtuellen Basisstation verbundenen Mobilgeräte unter eine bestimmte Mindestanzahl von Mobilgeräten. Die Steuervorrichtung 6 kann auch ausgebildet sein, zu erkennen, dass zwei virtuelle Basisstationen Mobilgeräte mit der gleichen Bewegung haben und das Herunterfahren und das Löschen einer der beiden virtuellen Basisstationen veranlassen. Eine andere Bedingung für das Löschen könnte sein, dass sich die virtuelle Basisstation bewegt, da die Verwaltung einer still stehenden virtuellen Basisstation nicht sinnvoll ist.

Die Steuervorrichtung 6 ist weiter ausgebildet, den festen Basisstationen 2 Anweisungen zu senden, das Aussenden von Signalen einer bestimmten virtuellen Basisstation zu beginnen oder das Aussenden der Signale einer bestimmten virtuellen Basisstation zu beenden. Diese Anweisungen werden auf der Basis der Zuordnung der festen Basisstation 2 zu der virtuellen Basisstation in der Steuervorrichtung 6 erzeugt. Die Steuervorrichtung 6 veranlasst somit den Wechsel der virtuellen Basisstation zu der in der Auswahlvorrichtung 8 ausgewählten festen Basisstation 2.

Der Wechsel der virtuellen Basisstation soll am Beispiel des Wechsels der festen Basisstation 2.2, die momentan die Signale der virtuellen Basisstation aussendet, zu einer ausgewählten festen Basisstation 2.3 in Fig. 1 beschrieben werden. Dabei wird gleichzeitig das Aussenden der Signale der virtuellen Basisstation von der festen Basisstation 2.2 unterbrochen, und das Aussenden der Signale der virtuellen Basisstation von der festen Basisstation 2.3 gestartet. Auch ein kurzzeitig gleichzeitiges Aussenden der Signale der virtuellen Basisstation von beiden festen Basisstationen 2.2 und 2.3 ist möglich. Bei einem kurzzeitigen gleichzeitigen Aussenden der Signale der virtuellen Basisstation werden die auszusendenden Signale sowohl an die beiden festen Basisstationen 2.2 und 2.3 vom Netzknoten 1 gesendet als auch die Daten aus dem Uplink doppelt an den beiden festen Basisstation 2.2 und 2.3 empfangen. Somit wechseln alle mit der virtuellen Basisstation verbundenen Mobilgeräte automatisch die feste Basisstation 2 entlang ihres Weges, ohne eine Verbindungsübergabe beantragen zu müssen, d.h. die mit der virtuellen Basisstation verbundenen Mobilgeräte, die sich mit der virtuellen Basisstation mitbewegen bleiben mit der gleichen virtuellen Basisstation verbunden, während sie entlang der Bewegung mit verschiedenen festen Basisstationen 2 kommunizieren. Auch kann so im Netz eventuell vorhergesagt werden, dass eine Verbindungsqualität von einer festen Basisstation 2 zwar kurzfristig schlechter als die einer anderen festen Basisstation 2 ist, aber wegen darauffolgender guter Verbindungsqualität ein Wechsel der festen Basisstation 2 nicht sinnvoll ist. Solche vorrausschauenden Planungen der Verbindungsübergabe kann in dem Mobilgerät nach dem aktuellen Mobilfunkstandard nicht realisiert werden. Gleichzeitig erfordert die Erfindung keine Änderung des Mobilfunkstandards, da das Mobilgerät die virtuelle Basisstation nicht von einer festen Basisstation 2 unterscheiden kann.

In einem Ausführungsbeispiel fragt die Initialisierungsvorrichtung 9 den Ort und/oder die Bewegung von Mobilgeräten in einem bestimmten räumlichen Bereich von dem Bewegungsdetektor 7 an. Aus den Orten und/oder Bewegungen der Mobilgeräte ermittelt die Initialisierungsvorrichtung 9 eine Gruppe von Mobilgeräten, die ein ähnliches Bewegungsmuster haben. Das Feststellen einer solchen Gruppe von Mobilgeräten könnte durch die gleiche Bewegungsrichtung von Mobilgeräten, die sich in einem bestimmten Abstand voneinander aufhalten realisiert werden. Allerdings ist eine solche Detektion aufwendig. Alternativ könnte eine Gruppe von Mobilgeräten mit einem gemeinsamen Bewegungsmuster dadurch detektiert werden, dass sich diese Mobilgeräte bei nacheinander folgenden festen Basisstationen 2 ungefähr gleichzeitig bei der jeweiligen festen Basisstation 2 anmelden.

In einem weiteren Ausführungsbeispiel der Initialisierungsvorrichtung 9 werden bestimmten festen Basisstationen 2 zufällig zur Erzeugung einer virtuellen Basisstation ausgewählt. Wenn die von der Initialisierungsvorrichtung 9 ausgewählte feste Basisstation 2 eine neu erzeugte virtuelle Basisstation aussendet und ein Zug den Sendebereich dieser festen Basisstation 2 passiert, melden sich einige der Mobilgeräte in der neuen virtuellen Basisstation an. Somit bewegt sich die Gruppe der Mobilgeräte, die in der virtuellen Basisstation angemeldet ist, sich mit dem Zug mit. Durch die Bewegung der in der virtuellen Basisstation angemeldeten Mobilgeräte wird dann in der Auswahlvorrichtung 8 eine nächste feste Basisstation 2 ausgewählt, die entlang der Bewegung des Zuges liegt. Somit bewegt sich die neue erzeugte virtuelle Basisstation automatisch mit einem Zug mit, der an der für die Erzeugung ausgewählten festen Basisstation 2 vorbeifährt. Nach und nach währen auch die restlichen Mobilgeräte in dem Zug diese virtuelle Basisstation als bevorzugte Basisstation aus, da diese kontinuierlich ein gutes Signal bietet. Sollte die Anzahl der in der virtuellen Basisstation eingeloggten Mobilgeräte nach einer bestimmten Zeitspanne nicht eine Mindestanzahl an Mobilgeräten erreichen, wird diese virtuelle Basisstation von der Steuervorrichtung 6 wieder gelöscht. So können ohne einen grossen Detektionsaufwand selbstorganisierend virtuelle Basisstationen erzeugt werden, wobei nur die virtuellen Basisstationen am Leben bleiben, die genügend Mobilgeräte aufweisen. Anstatt die feste Basisstation 2 und/oder den Zeitpunkt der Erzeugung der virtuelle Basisstation in der Initialisierungsvorrichtung 9 zufällig auszuwählen, könnte die Auswahl auch zeitlich und/oder örtlich auf der Basis des Fahrplans des Beförderungsmittels und/oder auf der Basis einer Detektion des Beförderungsmittels geschehen. Das Beförderungsmittel könnte durch eine Schnittstelle mit dem Beförderungsmittelbetreiber lokalisiert werden oder direkt auf der Basis der Signale des Beförderungsmittels detektiert werden. Der Zug kann zum Beispiel durch dessen Signale im Zugmobilfunk, z.B. dem Global System for Mobile Communications - Railway (GSM-R), detektiert werden. Dies erlaubt gezielt an Orten, wo das Beförderungsmittel passieren wird, eine virtuelle Basisstation zu erzeugen.

Auch könnte die Initialisierungsvorrichtung 10 gezielt in bestimmten Situationen eine Erzeugung einer virtuellen Basisstation veranlassen. So kann z.B. detektiert werden, dass die Gruppe der Mobilgeräte, die mit einer virtuellen Basisstation verbunden sind, Untergruppen hat, die sich in verschiedene Hauptrichtungen bewegen bzw. eine erste Untergruppe hat, die sich in eine Hauptrichtung bewegt, und eine zweite Untergruppe hat, die stillsteht. Dies kann zum Beispiel an grossen Umsteigepunkten des Zugnetzes geschehen. So kann die virtuelle Basisstation einer Untergruppe, die sich in eine Hauptrichtung bewegt, folgen, während an dem Ort der zweiten Untergruppe, die stillsteht, oder an dem Ort, wo sich die zweite Untergruppe hinbewegt, eine Erzeugung einer neuen virtuellen Basisstation veranlasst werden.

Die Ausführungsbeispiele zur Erzeugung von virtuellen Basisstationen können auch kombiniert werden.

In dem zuvor beschriebenen Ausführungsbeispiel wurde die Auswahl der nächsten festen Basisstation auf der Basis der Bewegung der in der virtuellen Basisstation eingewählten Mobilgeräte entschieden, so dass die virtuelle Basisstation den sich in einem Beförderungsmittel befindlichen Mobilgeräten automatisch folgt. Alternativ ist es auch möglich, die Auswahl der nächsten festen Basisstation direkt auf der Basis des Orts und/oder der Bewegung des Beförderungsmittels zu bestimmen. In diesem Ausführungsbeispiel ist die virtuelle Basisstation direkt einem bestimmten Beförderungsmittel zugeordnet. Fig. 3 zeigt ein Steuervorrichtung 6' eines solchen alternativen Ausführungsbeispiels. Die Steuervorrichtung 6' weist einen Bewegungsdetektor 7', eine Auswahlvorrichtung 8' und eine Initialisierungsvorrichtung 9' auf. Sofern nicht anders beschrieben entsprechen die Funktionen der Steuervorrichtung 6', des Bewegungsdetektors 7', der Auswahlvorrichtung 8' und der Initialisierungsvorrichtung 9' den entsprechenden Vorrichtungen der Steuervorrichtung 6.

Der Bewegungsdetektor 7' ist ausgebildet, den Ort und / oder die Bewegung eines Beförderungsmittels zu detektieren. Das Beförderungsmittel könnte durch eine Schnittstelle mit dem Beförderungsmittelbetreiber lokalisiert werden oder direkt auf der Basis von Signalen des Beförderungsmittels detektiert werden. Ein Zug als Beförderungsmittel kann zum Beispiel durch dessen Signale im Zugmobilfunk, z.B. dem Global System for Mobile Communications - Railway (GSM-R), detektiert werden.

Die Auswahlvorrichtung 8' ist ausgebildet, auf der Basis des Orts und/oder der Bewegung eines Beförderungsmittels die nächste feste Basisstation 2 auszuwählen, in deren Sendebereich das Beförderungsmittel eindringt oder eindringen wird. Dazu erhält die Auswahlvorrichtung 8' von dem Bewegungsdetektor 7' den Ort und/oder die Bewegung eines Beförderungsmittels. Bei der Auswahl könnte die zukünftige Route des Beförderungsmittels berücksichtigt werden. Die zukünftige Route kann bei einer möglichen Identifikation des Beförderungsmittels auf der Basis des Beförderungsmittelfahrplans bestimmt werden. Alternativ kann die zukünftige Route direkt von Signalen des Beförderungsmittels empfangen werden.

Die Initialisierungsvorrichtung 9' ist ausgebildet, den Zeitpunkt und/oder die feste Basisstation 2 für die Erzeugung einer neuen virtuellen Basisstation zu bestimmen. Der Zeitpunkt und die feste Basisstation 2, bei der die virtuelle Basisstation zum ersten Mal ausgesendet werden soll, kann zum Beispiel auf der Basis des Startpunkts oder eines sonstigen Ortes eines Beförderungsmittels gewählt werden. Der Startpunkt oder der sonstige Ort könnte nach dem Fahrplan eines Beförderungsmittels gewählt werden oder nach Informationen des Beförderungsmittelbetreibers. Auch könnten an bestimmten Punkten des Beförderungsmittelnetzes Beförderungsmittel durch den Bewegungsdetektor detektiert werden und eine feste Basisstation 2 zur Aussendung der neuen virtuellen Basisstation an dem Ort des Beförderungsmittels ausgewählt werden.

Steuervorrichtung 6' funktioniert grösstenteils wie die Steuervorrichtung 6. Alternativ zu der Steuervorrichtung 6 könnte in der Steuervorrichtung 6' die virtuelle Basisstation gelöscht werden, wenn das Beförderungsmittel sein Ziel erreicht hat.

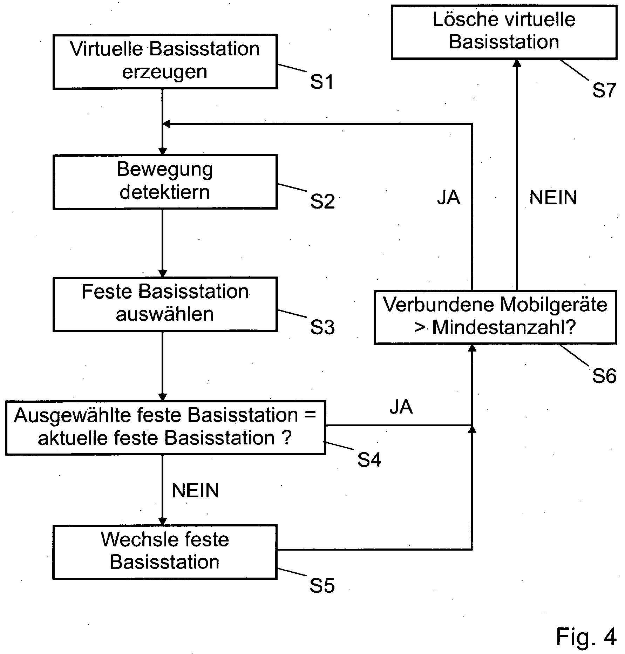

Fig. 4 zeigt exemplarische Verfahrensschritte des Kommunikationssystems zur Steuerung der virtuellen Basisstationen. In Schritt S1 wird wie zuvor beschrieben eine virtuelle Basisstation erzeugt. Dies beinhaltet je nach Ausführungsbeispiel z.B. die Festlegung einer festen Basisstation 2 zur Aussendung der virtuellen Basisstation auf der Basis der Detektion einer Gruppe von sich gemeinsam bewegenden Mobilgeräten, auf der Basis der Detektion von einem Beförderungsmittel, auf der Basis des Fahrplans eines Beförderungsmittels und/oder auf der Basis des Zufalls. Die Signale der virtuellen Basisstation werden von der bestimmten festen Basisstation 2 ausgesendet. In Schritt S2 wird die Bewegung und/oder der Ort je nach Ausführungsbeispiel einer Gruppe der in der virtuellen Basisstation eingewählten Mobilgeräte oder eines Beförderungsmittels bestimmt. In Schritt S3 wird eine feste Basisstation 2 auf der Basis der bestimmten Bewegung oder des bestimmten Orts ausgewählt, wie in Zusammenhang mit der Auswahlvorrichtung 8 oder 8' beschrieben. In Schritt S4 wird überprüft, ob diese ausgewählte feste Basisstation 2 die gleiche feste Basisstation 2 ist, die momentan die Signale der virtuellen Basisstation aussendet. Ist dies nicht dieselbe feste Basisstation 2, so wird in Schritt S5 die feste Basisstation 2 für das Aussenden der virtuellen Basisstation gewechselt. Dazu wird das Aussenden der Signale der virtuellen Basisstation von der momentan aussendenden festen Basisstation 2 unterbrochen und das Aussenden der Signale der virtuellen Basisstation der ausgewählten festen Basisstation 2 begonnen. Danach wird mit Schritt S6 weiterverfahren. Wird in Schritt S4 festgestellt, dass die ausgewählte feste Basisstation 2 die momentan aussendende feste Basisstation 2 ist, so wird direkt zu Schritt S6 gegangen. In Schritt S6 wird überprüft, ob eine bestimmte Mindestanzahl von Mobilgeräten in der virtuellen Basisstation angemeldet ist. Ist dies über eine bestimmte Zeitdauer nicht der Fall, so wird die virtuelle Basisstation heruntergefahren und gelöscht und die Aussendung ihrer Signale gestoppt. Sind genügend Mobilgeräte in der virtuellen Basisstation eingeloggt oder ist die Mindestzeitspanne noch nicht überschritten, so wird mit Schritt S2 weiterverfahren.

Die Erfindung ist nicht auf die hier beschriebenen Ausführungsbeispiele beschränkt, sondern bezieht sich auf alle unter die Ansprüche fallenden Ausführungsbeispiele. Auch wenn die Erfindung oft im Zusammenhang mit Zügen erläutert wurde, ist die Erfindung auf alle Arten von Beförderungsmitteln anwendbar.

## Patentansprüche

1. Verfahren für ein zelluläres Kommunikationssystem mit den Schritten:
Aussenden von Signalen einer virtuellen Basisstation von einer ersten festen Basisstation (2);
Auswählen einer zweiten festen Basisstation (2) auf der Basis des Orts und/oder der Bewegung einer Gruppe von Mobilgeräten;
Wechseln des Aussendeorts der Signale der virtuellen Basisstation von der ersten festen Basisstation (2) auf die zweite feste Basisstation (2).

2. Verfahren nach Anspruch 1, wobei weitere feste Basisstationen (2) nacheinander für das Aussenden von Signalen der virtuellen Basisstation so ausgewählt werden, dass die virtuelle Basisstation (2) die Gruppe von Mobilgeräten begleitet.

3. Verfahren nach einem der vorangehenden Ansprüche, wobei das Auswählen einer zweiten festen Basisstation (2) auf der Basis des Orts und/oder der Bewegung einer Gruppe von Mobilgeräten, die in der virtuellen Basisstation eingewählt sind, geschieht.

4. Verfahren nach einem der vorangehenden Ansprüche, wobei der Ort und/oder die Bewegung der Gruppe von Mobilgeräten auf der Basis des Orts und/oder der Bewegung eines Beförderungsmittels bestimmt wird.

5. Verfahren nach einem der vorangehenden Ansprüche, wobei nach dem Aussenden der virtuellen Basisstation von der zweiten festen Basisstation (2), das Aussenden von Signalen der virtuellen Basisstation von der ersten festen Basisstation (2) gestoppt wird.

6. Verfahren nach dem vorangehenden Anspruch, wobei die erste feste Basisstation (2) nach dem Stoppen des Aussendens der Signale der virtuellen Basisstation in einen Ruhezustand wechselt, wenn die weitere feste Basisstation (2) keine weiteren Signale einer weiteren virtuellen Basisstation (2) aussendet.

7. Verfahren nach einem der vorangehenden Ansprüche, wobei die zweite feste Basisstation (2) vor dem Beginn des Aussendens der Signale der virtuellen Basisstation von einem Ruhezustand in einen Betriebszustand wechselt.

8. Verfahren nach einem der vorangehenden Ansprüche, wobei die Signale der virtuellen Basisstation so ausgebildet sind, dass ein mit der virtuellen Basisstation verbundenes Mobilgerät der Gruppe von Mobilgeräten mit der virtuellen Basisstation verbunden bleibt, wenn die Signalaussendung der virtuelle Basisstation von der ersten festen Basisstation (2) auf die zweite feste Basisstation (2) wechselt.

9. Verfahren nach einem der vorangehenden Ansprüche, wobei die Erzeugung der virtuellen Basisstation die folgenden Schritte aufweist:
Erzeugen der virtuellen Basisstation;
Bestimmen der ersten festen Basisstation (2) zum ersten Aussenden der Signale der virtuellen Basisstation; und
Aussenden der Signale der virtuellen Basisstation von der bestimmten ersten festen Basisstation (2).

10. Verfahren nach dem vorangehenden Anspruch, wobei das Bestimmen der ersten festen Basisstation (2) zum ersten Aussenden der Signale der virtuellen Basisstation (2) das Detektieren einer Gruppe von Mobilgeräten auf der Basis einer gemeinsamen Bewegung und das Bestimmen der festen Basisstation (2) auf der Basis eines momentanen und/oder zukünftigen Orts der Gruppe von Mobilgeräten aufweist.

11. Verfahren nach Anspruch 9 oder 10, wobei das Bestimmen der ersten festen Basisstation (2) zum ersten Aussenden der Signale der virtuellen Basisstation (2) das Detektieren eines Beförderungsmittels und das Bestimmen der festen Basisstation (2) auf der Basis eines momentanen und/oder zukünftigen Orts des Beförderungsmittels aufweist.

12. Verfahren nach einem der vorangehenden Ansprüche, wobei das Kommunikationssystem die Informationen für mit der virtuellen Basisstation verbundenen Mobilgeräte an mehrere feste Basisstationen (2) aussendet, und die zweite feste Basisstation (2) die empfangenen Informationen mit den Signalen der virtuellen Basisstation aussendet.

13. Computerprogramm ausgebildet bei Ausführen auf einem Prozessor die Schritte eines Verfahrens eines der vorangehenden Ansprüche auszuführen.

14. Kommunikationssystem aufweisend feste Basisstationen (2) zur drahtlosen Kommunikation mit Mobilgeräten, wobei die festen Basisstationen (2) ausgebildet sind, Signale einer virtuellen Basisstation auszusenden; das Kommunikationssystem ferner umfasst:
eine Auswahlvorrichtung (8) ausgebildet zum Auswählen einer festen Basisstation (2) auf der Basis des Orts und/oder der Bewegung einer Gruppe von Mobilgeräten; und
eine Steuervorrichtung (9) ausgebildet zum Veranlassen der Aussendung von Signalen der virtuellen Basisstation von der ausgewählten festen Basisstation (2).

15. Kommunikationssystem nach Anspruch 14, wobei die ausgewählte feste Basisstation (2) ausgebildet ist, Signale mehrerer virtueller Basisstationen gleichzeitig auszusenden.

16. Kommunikationssystem nach Anspruch 14 oder 15, wobei die ausgewählte feste Basisstation (2) ausgebildet ist, gleichzeitig zu der Aussendung der Signale der virtuellen Basisstation Signale, die zu der ausgewählten festen Basisstation (2) zugeordnet sind, auszusenden.

## Claims

1. Method for a cellular communication system with the steps:
emitting signals of a virtual base station from a first fixed base station (2);
selecting a second fixed base station (2) on the basis of the location and/or of the movement of a group of mobile devices;
switching the place of emission of the signals of the virtual base station from the first fixed base station (2) to the second fixed base station (2).

2. Method according to claim 1, wherein further fixed base stations (2) are selected sequentially for the emission of signals of the virtual base station in such a way that the virtual base station (2) accompanies the group of mobile devices.

3. Method according to one of the preceding claims, wherein the selection of a second fixed base station (2) occurs on the basis of the location and/or of the movement of a group of mobile devices that are logged into the virtual base station.

4. Method according to one of the preceding claims, wherein the location and/or the movement of the group of mobile devices is determined on the basis of the location and/or of the movement of a means of transport.

5. Method according to one of the preceding claims, wherein after the transmission of the virtual base station from the second fixed base station (2), the transmission of signals of the virtual base station from the first fixed base station (2) is stopped.

6. Method according to the preceding claim, wherein the first fixed base station (2) after the transmission of the signals of the virtual base station is stopped is switched into an idle state if the further fixed base station (2) does not emit any further signals of a further virtual base station.

7. Method according to one of the preceding claims, wherein the second fixed base station (2) prior to the beginning of the transmission of the signals of the virtual base station switches from an idle state into an operating mode.

8. Method according to one of the preceding claims, wherein the signals of the virtual base station are designed so that a mobile device from the group of mobile devices connected with the virtual base station remains connected with the virtual base station when the signal transmission of the virtual base station switches from the first fixed base station (2) onto the second fixed base station (2).

9. Method according to one of the preceding claims, wherein generating the virtual base station comprises the following steps:
generating the virtual base station;
determining the first fixed base station 82) for the first transmission of the signals of the virtual base station; and
sending the signals of the virtual base station from the determined first fixed base station (2).

10. Method according to the preceding claim, wherein determining the first fixed base station (2) for the first transmission of the signals of the virtual base station (2) comprises detecting a group of mobile devices on the basis of a common movement and determining the fixed base station (2) on the basis of a current and/or future location of the group of mobile devices.

11. Method according to claim 9 or 10, wherein determining the first fixed base station (2) for the first transmission of the signals of the virtual base station (2) comprises detecting a means of transport and determining the fixed base station (2) on the basis of a current and/or future location of the means of transport.

12. Method according to one of the preceding claims, wherein the communication system sends the information for the mobile devices connected with the virtual base station to several fixed base stations (2), and wherein the second fixed base station (2) emits the received information with the signals of the virtual base station.

13. Computer program designed for executing on a processor the steps of a method of one of the preceding claims.

14. Communication system comprising fixed base stations (2) for the wireless communication with mobile devices, wherein the fixed base stations (2) are designed for transmitting signals of a virtual base station;
the communication system comprising further:
a selection device (8) designed for selecting a fixed base station (2) on the basis of the location and/or of the movement of a group of mobile devices; and
a control device (9) designed for triggering the emission of signals of the virtual base station from the selected fixed base station (2).

15. Communication system according to claim 14, wherein the selected fixed base station (2) is designed for transmitting signals of several virtual base stations simultaneously.

16. Communication system according to claim 14 or 15, wherein the selected fixed base station (2) is designed for transmitting simultaneously with the sending of the signals of the virtual base station signals that are associated with the selected fixed base station (2).

## Revendications

1. Procédé pour système de communication cellulaire avec les étapes suivantes :
envoi de signaux d'une station de base virtuelle depuis une première station de base fixe (2) ;
sélection d'une deuxième station de base fixe (2) sur la base de l'emplacement et/ou du déplacement d'un groupe d'appareils mobiles;
changement du lieu d'émission des signaux de la station de base virtuelle depuis la première station de base fixe (2) vers la deuxième station de base fixe (2).

2. Procédé selon la revendication 1, dans lequel des stations de base fixes supplémentaires (2) sont sélectionnées successivement pour l'envoi de signaux de la station de base virtuelle en telle sorte que la station de base virtuelle (2) accompagne le groupe d'appareils mobiles.

3. Procédé selon l'une des revendications précédentes, dans lequel la sélection d'une deuxième station de base fixe (2) s'effectue sur la base de l'emplacement et/ou du déplacement d'un groupe d'appareils mobiles qui sont connectés dans la station de base virtuelle.

4. Procédé selon l'une des revendications précédentes, dans lequel l'emplacement et/ou le déplacement du groupe d'appareils mobiles est déterminé sur la base de l'emplacement et/ou du déplacement d'un moyen de transport.

5. Procédé selon l'une des revendications précédentes, dans lequel après l'envoi de la station de base virtuelle depuis la deuxième station de base fixe (2), l'envoi de signaux de la station de base virtuelle depuis la première station de base fixe (2) est stoppé.

6. Procédé selon la revendication précédente, dans lequel, une fois que l'envoi des signaux de la station de base virtuelle a été stoppé, la première station de base fixe (2) passe en un mode de veille lorsque la station de base fixe supplémentaire (2) n'envoie pas de signaux supplémentaires d'une station de base virtuelle (2) supplémentaire.

7. Procédé selon l'une des revendications précédentes, dans lequel, avant le début de l'envoi de signaux de la station de base virtuelle, la deuxième station de base fixe (2) passe d'un mode de veille à un état de marche.

8. Procédé selon l'une des revendications précédentes, dans lequel les signaux de la station de base virtuelle sont constitués de telle sorte qu'un appareil mobile parmi le groupe d'appareils mobiles connecté avec la station de base virtuelle reste connecté avec la station de base virtuelle lorsque l'envoi de signaux de la station de base virtuelle change de la première station de base fixe (2) vers la deuxième station de base fixe (2).

9. Procédé selon l'une des revendications précédentes, dans lequel l'établissement de la station de base virtuelle comprend les étapes suivantes :
de générer la station de base virtuelle ;
de déterminer la première station de base fixe (2) pour le premier envoi des signaux de la station de base virtuelle ; et
d'envoyer les signaux de la station de base virtuelle depuis la première station de base fixe (2) déterminée.

10. Procédé selon la revendication précédente, dans lequel de déterminer la première station de base fixe (2) pour le premier envoi des signaux de la station de base virtuelle (2) comprend la détection d'un groupe d'appareils mobiles sur la base d'un déplacement commun et de déterminer la station de base fixe (2) sur la base d'un emplacement momentané et/ou futur du groupe d'appareils mobiles.

11. Procédé selon la revendication 9 ou 10, dans lequel de déterminer la première station de base fixe (2) pour le premier envoi des signaux de la station de base virtuelle (2) comprend la détection d'un moyen de transport et de déterminer la station de base fixe (2) sur la base d'un emplacement momentané et/ou futur du moyen de transport.

12. Procédé selon l'une des revendications précédentes, dans lequel le système de communication envoie les informations pour les appareils mobiles connectés avec la station de base virtuelle à plusieurs stations de base fixes (2) et dans lequel la deuxième station de base fixe (2) envoie les informations reçues avec les signaux de la station de base virtuelle.

13. Programme d'ordinateur configuré pour exécuter sur un processeur les étapes d'un procédé selon une des revendications précédentes.

14. Système de communication ayant des stations de base fixes (2) pour la communication sans fil avec des appareils mobiles, dans lequel les stations de base fixes (2) sont conçues pour envoyer des signaux d'une station de base virtuelle ;
le système de communication comprenant en outre :
un dispositif de sélection (8) conçu pour sélectionner une station de base fixe (2) sur la base de l'emplacement et/ou du déplacement d'un groupe d'appareils mobiles ; et
un dispositif de contrôle (9) conçu pour provoquer l'envoi de signaux de la station de base virtuelle depuis la station de base fixe (2) sélectionnée.

15. Système de communication selon la revendication 14, dans lequel la station de base fixe (2) choisie est conçue pour envoyer simultanément des signaux de plusieurs stations de base virtuelles.

16. Système de communication selon la revendication 14 ou 15, dans lequel la station de base fixe (2) choisie est conçue pour, simultanément avec l'envoi des signaux de la station de base virtuelle, envoyer des signaux attribués à la station de base fixe (2) sélectionnée.
